Europäisches Patentamt

European Patent Office

Office européen des brevets

(19)

(11) Veröffentlichungsnummer: **0 388 653**
**A2**

(12) # EUROPÄISCHE PATENTANMELDUNG

(21) Anmeldenummer: **90103429.8**

(22) Anmeldetag: **22.02.90**

(51) Int. Cl.⁵: **H01S 3/02, H01S 3/042,**
**H01S 3/093**

(30) Priorität: **18.03.89 DE 8903388 U**

(43) Veröffentlichungstag der Anmeldung:
**26.09.90 Patentblatt 90/39**

(84) Benannte Vertragsstaaten:
**CH DE DK FR GB IT LI NL SE**

(71) Anmelder: **Firma Carl Zeiss**

**D-7920 Heidenheim (Brenz)(DE)**
(84) **CH DE DK FR IT LI NL SE**

Anmelder: **CARL-ZEISS-STIFTUNG trading as**
**CARL ZEISS**

**D-7920 Heidenheim (Brenz)(DE)**
(84) **GB**

(72) Erfinder: **Blumentritt, Martin**
**Langweidstrasse 23**
**D-7923 Königsbronn(DE)**
Erfinder: **Greve, Peter, Dr.**
**Teussenbergweg 13**
**D-7087 Essingen(DE)**
Erfinder: **Kohler, Reiner**
**Masurenstrasse 3**
**D-7080 Aalen(DE)**

(54) **Festkörperlaser.**

(57) Bei einem Festkörperlaser sind die Pumplampen (26) mit Fassungsteilen (15) verbunden und mit diesen in die Pumpkammer (17) durch mechanische Führungen und Anschläge (17h, 17s, 10o) in eine vorgegebene und reproduzierbare Lage einsetzbar. Dadurch ist ein Wechsel der Pumplampen (26) ohne Neu- oder Nachjustierung möglich.

Fig. 1

EP 0 388 653 A2

## Festkörperlaser

Die vorliegende Neuerung betrifft einen Festkörperlaser mit einem Laserstab und mindestens einer Pumplampe in einer Pumpkammer aus mindestens zwei Teilen.

Bei optisch gepumpten Festkörperlasern sitzt der Laserstab häufig in einer sog. Pumpkammer, deren Innenraum (auch Kavität genannt) derart ausgebildet ist, daß die von der Pumplichtlampe bzw. den Pumplichtlampen ausgehende Anregungsstrahlung möglichst vollständig auf den Laserstab reflektiert wird.

Die Pumpkammer ist oft unmittelbar oder über eine Grundplatte an einem Grundgestell befestigt, das - um eine gute thermische Stabilität zu erreichen - aus mindestens drei Invarstäben und zwei Platten besteht, welche die genaue Lage der Invarstäbe zueinander in der Nähe ihrer Enden festlegen. An den Platten können der Resonator- und der Auskoppelspiegel befestigt sein. Eventuell vorhandene weitere Bauteile des Lasers sind an zusätzlichen Platten oder an mindestens zwei der drei Invarstäbe fixiert.

Bekannte derartige Festkörperlaser haben trotz des beschriebenen Aufbaus den Nachteil, daß der Austausch eines Bauteiles umständlich ist und/oder nach dem Austausch der Laser neu- oder mindestens nachjustiert werden muß. Das ist insbesondere bei den Pumplampen störend, da deren Lebensdauer häufig verhältnismäßig kurz ist.

Der vorliegenden Neuerung liegt daher die Aufgabe zugrunde, einen Festkörperlaser zu schaffen, bei dem der Austausch der Pumplampen mit möglichst wenig Aufwand durchführbar ist und keine Justierarbeiten erfordert.

Die gestellte Aufgabe wird gemäß der Neuerung dadurch gelöst, daß die Pumplampen mit Fassungsteilen fest verbunden sind und mit diesen in die Pumpkammer durch mechanische Führungen und Anschläge in eine vorgegebene und reproduzierbare Lage einsetzbar sind. Damit kommen die Pumplampen auch in eine vorgegebene Lage zum Laserstab. Die vorgegebene Lage, d.h. die richtige Lage in der Pumpkammer, wird dadurch erreicht, daß die Pumpkammer und die Fassungsteile mit den Pumplampen in ihren mechanischen Abmessungen genügend genau aufeinander abgestimmt sind.

In einer besonders vorteilhaften Ausführungsform werden als mechanische Führungen und Anschläge für die Fassungsteile die Stirnwände des Unterteils der Pumpkammer, Ausschnitte in diesen Stirnwänden und die Oberfläche einer Grundplatte, auf welcher das Unterteil der Pumpkammer sitzt, verwendet.

In einer weiteren vorteilhaften Ausführungsform sind die Fassungsteile mit einem Kanal für einen Kühlmitteldurchfluß von der Grundplatte zur Pumplampe bzw. von der Pumplampe zur Grundplatte und mit einer Aufnahme für ein Glasrohr für den Kühlmitteldurchfluß um und entlang der Pumplampe ausgebildet.

Weitere vorteilhafte Ausgestaltungen der Neuerung gehen aus den Unteransprüchen und dem beschriebenen Ausführungsbeispiel hervor.

Ein besonderer Vorteil der Neuerung ist, daß nicht nur gleichartige Pumplampen auf einfache Art und ohne Nachjustierung ausgetauscht werden können, sondern daß durch entsprechend ausgebildete Fassungsteile mit gleichen Anschlußmaßen für die mechanischen Führungen und Anschläge auch verschiedenartige Pumplampen, z.B. von verschiedenen Herstellern, ausgetauscht werden können.

Die Neuerung wird im folgenden anhand eines in den Figuren 1 bis 3 dargestellten Ausführungsbeispieles näher erläutert. Dabei zeigen

Figur 1 eine Explosionsdarstellung der Neuheit;

Figur 2 einen Schnitt durch die Fassungsteile für die Pumplampen und

Figur 3 zwei Beispiele von unterschiedlich ausgebildeten Pumpkammern.

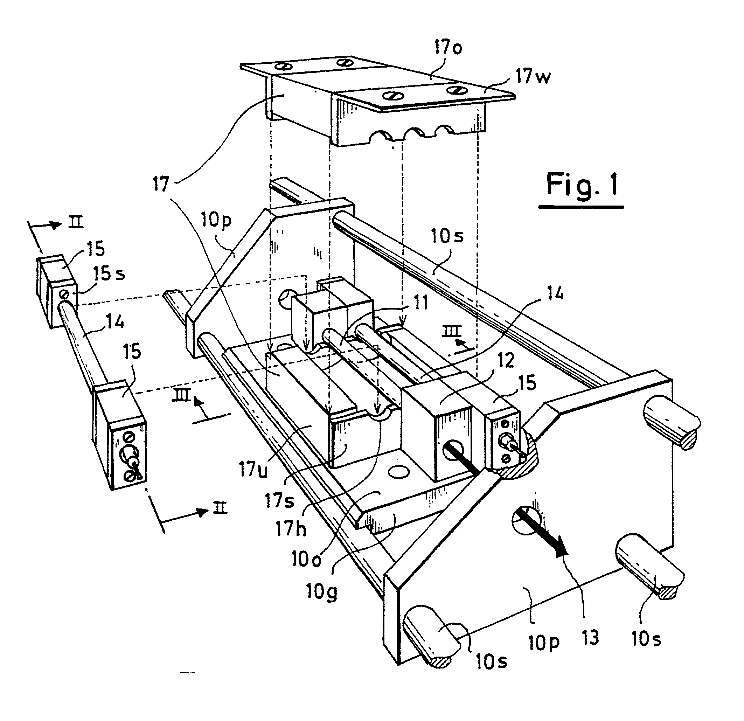

In Figur 1 ist ein bekanntes Grundgestell für Laseranordnungen dargestellt, welches aus drei Invarstangen (10s) und zwei Platten (10p) besteht. Auf den unteren beiden Invarstangen ist eine ebenfalls bekannte Grundplatte (10g) (mit nicht gezeichneten Teilen) befestigt, auf der eine zweiteilige bekannte Pumpkammer (17) sitzt, deren Oberteil (17o) nach oben abgenommen werden kann, während das Unterteil (17u) fest mit der Grundplatte (10g) verbunden bleibt.

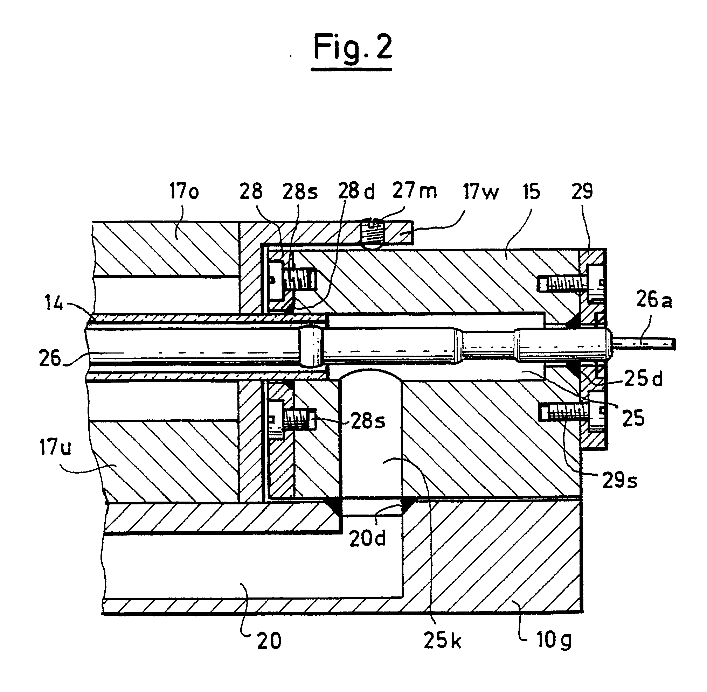

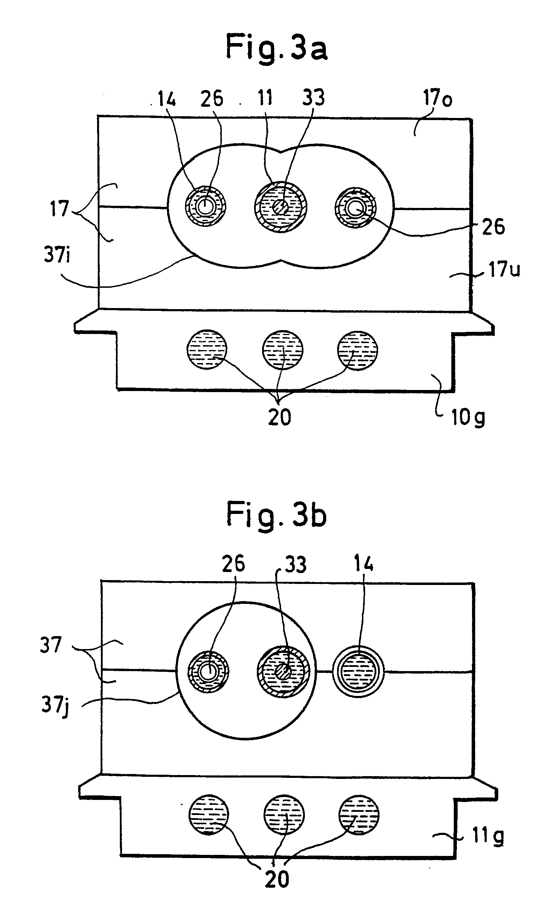

Im dargestellten Ausführungsbeispiel befindet sich - wie in Figur 3a, die einen Schnitt durch die Pumpkammer (17) zeigt, genauer dargestellt - der Laserstab (33), welcher den Laserstrahl (13) aussendet, in einem Glasrohr (11), das von Kühlwasser durchströmt wird. Ebenso befinden sich die zur Anregung der Laserstrahlung notwendigen Pumplampen (26) in von Kühlwasser durchströmten Glasrohren (14). Pumplampen (26) und Glasrohre (14) sind mit den Fassungsteilen (15) verbunden - wie später mit Figur 2 ausführlich beschrieben wird - und mit diesen Fassungsteilen herausnehmbar und einsetzbar, wie in Figur 1 dargestellt, wenn zuvor das Oberteil (17o) der Pumpkammer (17) abgenommen wurde.

Beim Einsetzen kommen die Pumplampen (26) auf folgende Weise in eine genau definierte Lage zur Pumpkammer (17) und damit auch zum Laserstab (33): Das Glasrohr (14) wird durch die halbkreisförmigen Ausschnitte (17h) in den Stirnwänden (17s) der Pumpkammer (17) geführt. In Richtung der Achse des Glasrohres (14) erfolgt die Führung dadurch, daß der Abstand der Stirnseiten (15s) der Fassungsteile (15) genau dem Außenabstand der Stirnwände (17s) der Pumpkammer (17) entspricht. Und schließlich sitzt das Glasrohr (14) in den Fassungsteilen (15) in einer solchen Höhe, daß, wenn die Fassungsteile (15) auf der Oberfläche (10o) der Grundplatte (10g) aufsitzen, die Achse des Glasrohres (14) und damit auch die Achse der Pumplampe (26) gerade in die richtige Höhe in der Pumpkammer (17) kommt.

Die Fassungsteile (15) können auch justierbare Anlageflächen haben, z.B. an ihren Stirnseiten (15s), um bei den Pumplampen exemplarbedingte Abweichungen in der Lage der Elektroden ausgleichen zu können. Häufig langt jedoch eine ausreichend genaue Herstellung der entsprechenden mechanischen Teile.

Der genaue Aufbau der Fassungsteile (15) ist in der Figur 2 dargestellt. Das Glasrohr (14) sitzt mit etwas Spiel in der Bohrung (25) und wird durch den Dichtungsring (28d) festgeklemmt, wenn die Platte (28) mit den Schrauben (28s) angeschraubt ist. Die im Glasrohr (14) ohne Berührung mit ihr sitzende Pumplampe (26) wird am äußeren Ende des Fassungsteiles (15) durch den Dichtring (25d) festgeklemmt, wenn die Platte (29) mit den Schrauben (29s) angeschraubt ist. An den Anschluß (26a) wird die elektrische Stromversorgung z.B. durch eine handelsübliche Kontaktbuchse oder durch eine Schraubklemme angeschlossen.

Die Fassungsteile (15) enthalten außerdem einen Kanal (25k) für die beim Betrieb notwendige Kühlflüssigkeit, welche aus der Grundplatte (10g) durch den Kühlkanal (20) zu- bzw. abgeführt wird. Am Übergang zwischen Grundplatte (10g) und Fassungsteil (15) sitzt ein Dichtungsring (20d). Gegen ihn wird das Fassungsteil (15) gedrückt, wenn das Oberteil (17o) der Pumpkammer (17) mit dem Winkel (17w) und der einstellbaren Madenschraube (27m) aufgesetzt wird.

Die Fassungsteile (12) für den Laserstab (33) und das Glasrohr (11) sind entsprechend aufgebaut. Im Gegensatz zu den Fassungsteilen (15) für die Pumplampen (26) werden sie jedoch an der Grundplatte (10g) durch (nicht gezeichnete) Schrauben dauerhaft genau fixiert.

Auf die Grundplatte (10g) können unterschiedliche Pumpkammern aufgesetzt werden. In Figur 3a ist - entsprechend dem Ausführungsbeispiel von Figur 1 - eine Pumpkammer (17) für zwei Pumplampen (26) dargestellt. Der Innenraum (37i) hat in bekannter Weise als Querschnitt eine Doppelellipse, in deren äußeren Brennpunkten die Pumplampen (26) und in deren gemeinsamen inneren Brennpunkt der Laserstab (33) angeordnet ist.

Figur 3b zeigt eine andere Ausführung der Pumpkammer (37), bei der nur eine Pumplampe (26) verwendet wird. In diesem Fall hat der Innenraum (37j) einen kreisförmigen oder elliptischen Querschnitt. Wenn die gleiche Grundplatte (10g) wie in den Figuren 1 und 3a verwendet wird, muß infolge der bei ihr vorhandenen Kühlkanäle (20) an Stelle der zweiten Pumplampe lediglich ein Glasrohr (14) mit entsprechenden Fassungsteilen eingesetzt werden.

Der beschriebene Aufbau gestattet nicht nur die Verwendung verschiedener Pumpkammern, sondern auch einen leichten Wechsel zwischen verschiedenen Laserstäben (33) zusammen mit ihren Fassungsteilen (12). Der Hauptvorteil des beschriebenen Aufbaus besteht jedoch darin, daß die Pumplampen einfach ausgewechselt werden können, ohne daß eine Neu- oder Nachjustierung erforderlich ist, da der Austausch der Pumplampen die Justierung des Laserstabes (33) im Resonator nicht beeinflußt. Außerdem können auch unterschiedliche Pumplampen, selbst von verschiedenen Herstellern, durch entsprechende Fassungsteile mit gleichen Anschlußmaßen für die mechanischen Führungen und Anschläge (17h, 17s, 10o) verwendet werden, ohne daß Änderungen am übrigen Aufbau notwendig sind.

Die Grundplatte (10g) kann mit ihren Aufbauten in verschiedenen Baulängen hergestellt werden, so daß verschiedene Leistungsklassen möglich sind. Ferner können natürlich in das Grundgestell aus den Invarstäben (10s) und den Platten (10p) zusätzliche Komponenten wie akustooptischer Modulator, Frequenzverdoppler, Fasereinkoppler und Shutter eingesetzt werden, so daß durch den modularen Aufbau unterschiedliche Systeme aufgebaut werden können.

Selbstverständlich ist auch ein entsprechender Aufbau ohne Kühleinrichtung möglich.

**Ansprüche**

1. Festkörperlaser mit einem Laserstab (33) und mindestens einer Pumplampe (26) in einer Pumpkammer (17) aus mindestens zwei Teilen (17o, 17u), dadurch gekennzeichnet, daß die Pumplampen (26) mit Fassungsteilen (15) verbunden sind und mit diesen in die Pumpkammer (17) durch mechanische Führungen und Anschläge (17h, 17s, 10o) in eine vorgegebene und reproduzierbare Lage einsetzbar sind.

2. Festkörperlaser nach Anspruch 1, dadurch gekennzeichnet, daß als mechanische Führungen und Anschläge die Stirnwände (17s) der Pumpkammer (17), Ausschnitte (17h) in diesen Stirnwänden und die Oberfläche (10o) einer Grundplatte (10g), auf welcher das Unterteil (17u) der Pumpkammer (17) sitzt, vorgesehen sind.

3. Festkörperlaser nach Anspruch 1 oder 2, dadurch gekennzeichnet, daß die Fassungsteile (15) mit einem Kanal (25, 25k) für einen Kühlmitteldurchfluß von der Grundplatte (10g) zur Pumplampe (26) bzw. von der Pumplampe (26) zur Grundplatte (10g) und mit einer Aufnahme (28d) für ein Glasrohr (14) für den Kühlmitteldurchfluß um und entlang der Pumplampe (26) ausgebildet sind.

4. Festkörperlaser nach einem der Ansprüche 1 bis 3, dadurch gekennzeichnet, daß die Fassungsteile (15) der Pumplampen (26) für verschiedene Pumplampenausführungen gleiche Anschlußmaße hinsichtlich der mechanischen Führungen und Anschläge (17s, 17h, 10o) haben.

5. Festkörperlaser nach einem der Ansprüche 1 bis 4, dadurch gekennzeichnet, daß Pumpkammern (17, 37) für eine oder zwei Pumplampen (26) und mit unterschiedlich geformten reflektierenden Innenflächen (37i, 37j) auf die Grundplatte (10g) aufsetzbar sind.

6. Festkörperlaser nach einem der Ansprüche 1 bis 5, dadurch gekennzeichnet, daß der Laserstab (33) mit Fassungsteilen (12) verbunden und mit diesen auswechselbar ist.

7. Festkörperlaser nach Anspruch 6, dadurch gekennzeichnet, daß die Fassungsteile (12) für den Laserstab (33) mit einem Kanal für den Kühlmitteldurchfluß von der Grundplatte (10g) zum Laserstab (33) bzw. vom Laserstab (33) zur Grundplatte (10g) und mit einer Aufnahme für ein Glasrohr (11) für den Kühlmitteldurchfluß um und entlang dem Laserstab (33) ausgebildet sind.

8. Festkörperlaser nach einem der Ansprüche 1 bis 7, dadurch gekennzeichnet, daß für die Verbindungen zwischen den Fassungsteilen (12, 15) mit der Pumplampe (26), dem Laserstab (33) und den Glasrohren (11, 14) zusammengedrückte Dichtungsringe (28d, 26d) vorgesehen sind.

9. Festkörperlaser nach einem der Ansprüche 1 bis 8, dadurch gekennzeichnet, daß das Oberteil (17o) der Pumpkammer (17) abnehmbar oder abklappbar ausgebildet ist und daß bei aufgesetztem Oberteil die Fassungsteile (15) der Pumplampe (26) gegen Dichtungen (20d) an der Übergangsstelle zwischen den Kanälen (20, 25k) von Fassungsteilen (15) und Grundplatte (10g) gedrückt sind.

10. Festkörperlaser nach einem der Ansprüche 1 bis 9, dadurch gekennzeichnet, daß für verschiedene Leistungsklassen des Lasers unterschiedliche Grundplatten (10g) mit unterschiedlichen Abmessungen der Führungen und Anschläge (17h, 17s, 10o) für die Pumplampen (26) mit ihren Fassungsteilen (15) und den Laserstab (33) mit seinen Fassungsteilen (12) vorgesehen sind.

Fig. 1

# Fig. 2

## Fig.3a

## Fig.3b